(19) Europäisches Patentamt
European Patent Office
Office européen des brevets

(11) **EP 1 966 570 B1**

(12) **EUROPÄISCHE PATENTSCHRIFT**

(45) Veröffentlichungstag und Bekanntmachung des Hinweises auf die Patenterteilung:
**24.06.2015 Patentblatt 2015/26**

(21) Anmeldenummer: **06819497.6**

(22) Anmeldetag: **15.11.2006**

(51) Int Cl.:
*G01M 1/12* *(2006.01)*      *B60G 17/016* *(2006.01)*
*G01G 19/08* *(2006.01)*

(86) Internationale Anmeldenummer:
**PCT/EP2006/068486**

(87) Internationale Veröffentlichungsnummer:
**WO 2007/071498 (28.06.2007 Gazette 2007/26)**

(54) **VERFAHREN ZUR PLAUSIBILISIERUNG EINER ERMITTELTEN FAHRZEUGMASSE**

METHOD FOR CHECKING THE PLAUSIBILITY OF A DETERMINED VEHICLE MASS

PROCEDE DE PLAUSIBILISATION DE LA MASSE DETECTEE D'UN VEHICULE

(84) Benannte Vertragsstaaten:
**DE FR**

(30) Priorität: **20.12.2005 DE 102005060857**

(43) Veröffentlichungstag der Anmeldung:
**10.09.2008 Patentblatt 2008/37**

(73) Patentinhaber: **ROBERT BOSCH GMBH**
**70442 Stuttgart (DE)**

(72) Erfinder:
• **NIMMO, Matthew**
**71642 Ludwigsburg (DE)**
• **BOROS, Laszlo**
**70825 Korntal-Muenchingen (DE)**
• **WOMMER, Michael**
**74226 Nordheim/Nordhausen (DE)**

(56) Entgegenhaltungen:
**DE-B4- 10 307 511     US-A- 6 015 192**

• **GERMANN S ET AL: "Monitoring of the friction coefficient between tyre and road surface" CONTROL APPLICATIONS, 1994., PROCEEDINGS OF THE THIRD IEEE CONFERENCE ON GLASGOW, UK 24-26 AUG. 1994, NEW YORK, NY, USA, IEEE, 24. August 1994 (1994-08-24), Seiten 613-618, XP010130989 ISBN: 0-7803-1872-2**

EP 1 966 570 B1

**Beschreibung**

Stand der Technik

Die Erfindung betrifft ein Verfahren zur Detektion des Beladungszustandes eines Kraftfahrzeugs.

Das Fahrverhalten eines Fahrzeugs z.B. bzgl. der Längs- oder Querdynamik wird wesentlich durch seine Masse und Schwerpunktslage beeinflusst. So hängt z.B. die ideale Bremskraftverteilung wesentlich von den jeweiligen Achslasten ab.

Bei Fahrzeugen mit einer großen möglichen Zuladung kann sich das Gesamtgewicht des Fahrzeugs durch die Zuladung verdoppeln. Dabei kann sich die Schwerpunktslage in Längsrichtung um mehrere Dutzend Zentimeter in Richtung der Hinterachse verschieben. Durch das unterschiedliche Gesamtgewicht wird das Verhalten von Fahrdynamik- und Radschlupfreglern beeinflusst. So benötigt beispielsweise ein beladenes Fahrzeug ein viel höheres Antriebsmoment, um eine zufriedenstellende Beschleunigung zu erreichen. Gleichzeitig kann die beladene Antriebsachse viel mehr Antriebsmoment absetzen, ohne dabei Gefahr zu laufen, dass das angetriebene Rad in übermäßig hohen Antriebsschlupf getrieben wird.

Die derzeit bekannten Konzepte zur Schätzung der Masse weisen den Nachteil auf, dass sie relativ empfindlich auf Störungen bzw. Veränderungen der Eingangssignale und Systemparameter reagieren.

Da die mangelnde Genauigkeit schon im zugrunde gelegten Model verankert ist, kann allein durch das Modell die geschätzte Masse nicht ohne weiteres als fehlerhaft erkannt werden. Je nach Implementierung kann die Massenschätzung so parametrisiert werden, dass sie erst bei Überschreiten bestimmter Längsbeschleunigungs- und/oder Kraft-Schwellen aktiviert wird. Auf diese Weise kann die Genauigkeit der Massenschätzung trotz erwähnter Störgrößen beibehalten werden. Es nimmt dann jedoch die Verfügbarkeit der Schätzung ab, da die Ereignisse, bei denen geschätzt werden darf, mit zunehmender Anforderung an die Genauigkeit abnehmen.

Aus der DE 103 07 511 A1 sind ein Verfahren und eine Vorrichtung zur computergestützten Schätzung des Masse eines Fahrzeugs bekannt. Die Schätzung basiert auf der Gleichgewichtsbeziehung zwischen der Antriebskraft F und der Summe aus Trägheitskraft und den Antriebswiderständen, in welcher als Größen die Masse m und der Steigungswinkel der Fahrbahn enthalten sind.

Die US 6, 015, 192 A offenbart ein System zur Schätzung einer Fahrzeuggeschwindigkeit und/oder des Reibungskoeffizienten einer Fahrbahnoberfläche. Dieses System für Radfahrzeuge umfasst Sensoren zur Erfassung der Radgeschwindigkeit, der Radlast, sowie der longitudinalen Antriebs- oder Bremskraft. Abhängig von diesen Sensorsignalen werden in einer Schätz- und Steuereinrichtung die Fahrzeuglängsgeschwindigkeit und/oder der Reibungskoeffizient der Fahrbahnoberfläche ermittelt.

Aus Germann et al: "Monitoring of the friction coefficient between tyre and road surface", Control Applications, 1994, Proceedings of the third IEEE Conference on Glasgow, UK, 24 - 26 Aug. 1994, New York, NY, USA, IEEE, 24. August 1994, Seiten 613- 618, ISBN: 0-7803-1872-2 ist ein Überwachungssystem für Reibungskoeffizienten zwischen Reifen und Fahrbahnoberfläche bekannt. Dieses benutzt lineare und nichtlineare mathematische Modelle zur Beschreibung der µ-Schlupf-Kurve und zur Berechnung dynamischer Radlasten und longitudinaler Reifenkräfte.

Aus der DE 103 07 511 B4 sind ein Verfahren und eine Vorrichtung zur computergestützten Schätzung der Masse eines Fahrzeugs bekannt. Dieses basiert auf der Gleichgewichtsbeziehung zwischen der Antriebskraft und der Summe aus Trägheitskraft und den Antriebswiderständen.

Die Merkmale des Oberbegriffs von Anspruch 1 sind der US 6, 015, 192 A entnommen.

Offenbarung der Erfindung

Die Erfindung betrifft ein Verfahren zur Detektion des Beladungszustandes eines Kraftfahrzeugs, bei dem

- bei Nichtvorliegen einer Kurvenfahrt erste Radlasten aller vier Räder oder zumindest wenigstens des späteren kurveninneren Hinterrades und des späteren kurveninneren Vorderrades ermittelt werden,
- bei Vorliegen einer Kurvenfahrt zweite Radlasten wenigstens des kurveninneren Hinterrades und des kurveninneren Vorderrades ermittelt werden und
- abhängig von den ersten und zweiten Radlasten eine Information über den Beladungszustand des Kraftfahrzeugs ermittelt wird. Dadurch ist es auf einfache Art und Weise möglich, Beladungsinformationen zu gewinnen, welche beispielsweise zur Plausibilisierung einer Massenschätzung verwendet werden können.

Dabei handelt es sich bei der Information über den Beladungszustand um die Ermittlung, ob das Fahrzeug unbeladen oder beladen ist. Bereits durch diese Information ist eine Grobplausibilisierung einer Massenschätzung möglich.

Erfindungsgemäß ist vorgesehen, dass das Fahrzeug dann als unbeladen detektiert wird, wenn

- die zweite Radlast des kurveninneren Vorderrades um einen ersten Betrag geringer als die erste Radlast des kurveninneren Vorderrades ist und
- die zweite Radlast des kurveninneren Hinterrades um einen zweiten Betrag geringer als die erste Radlast des kurveninneren Hinterrades ist,
- wobei der zweite Betrag größer als der erste Betrag ist.

Erfindungsgemäß ist weiter vorgesehen, dass das Fahrzeug dann als beladen detektiert wird, wenn

- die zweite Radlast des kurveninneren Vorderrades um einen ersten Betrag geringer als die erste Radlast des kurveninneren Vorderrades ist und
- die zweite Radlast des kurveninneren Hinterrades um einen zweiten Betrag geringer als die erste Radlast des kurveninneren Hinterrades ist,
- wobei der zweite Betrag kleiner als der erste Betrag ist.

Eine vorteilhafte Ausgestaltung der Erfindung ist dadurch gekennzeichnet, dass das Fahrzeug dann als unbeladen detektiert wird, wenn

- die zweite Radlast des kurveninneren Vorderrades nur geringfügig geringer als die erste Radlast des kurveninneren Vorderrades ist und
- die zweite Radlast des kurveninneren Hinterrades wesentlich geringer als die erste Radlast des kurveninneren Hinterrades ist.

Eine vorteilhafte Ausgestaltung der Erfindung ist dadurch gekennzeichnet, dass das Fahrzeug dann als beladen detektiert wird, wenn

- die zweite Radlast des kurveninneren Vorderrades wesentlich geringer als die erste Radlast des kurveninneren Vorderrades ist und
- die zweite Radlast des kurveninneren Hinterrades nur geringfügig geringer als die erste Radlast des kurveninneren Hinterrades ist.

Eine vorteilhafte Ausgestaltung der Erfindung ist dadurch gekennzeichnet, dass die Ermittlung der ersten Radlasten und der zweiten Radlasten derart vorgenommen wird, dass sich zwischen den beiden Ermittlungen die Beladung oder Beladungsverteilung des Fahrzeugs nicht ändert.

Eine vorteilhafte Ausgestaltung der Erfindung ist dadurch gekennzeichnet, dass die Radlasten aus der Reifenlängskraft und dem Reibbeiwert des Kontaktes zwischen Reifen und Fahrbahn ermittelt werden.

Eine vorteilhafte Ausgestaltung der Erfindung ist dadurch gekennzeichnet, dass

- zusätzlich die Radlasten an der Hinterachse mit den Radlasten an der Vorderachse verglichen werden und
- für den Fall, dass die Radlasten an der Hinterachse signifikant höher als die Radlasten an der Vorderachse sind, das Fahrzeug als beladen detektiert wird.

Überschreitet beispielsweise die Differenz der Summe der Radlasten and der Hinterachse und der Summe des Radlasten an der Vorderachse einen vorgegebenen Schwellenwert, dann wird das Fahrzeug als beladen detektiert.

Weiter umfasst die Erfindung eine Vorrichtung, enthaltend Mittel zur Durchführung der vorstehend geschilderten genannten Verfahren.

Die vorteilhaften Ausgestaltungen der erfindungsgemäßen Verfahren äußern sich auch als vorteilhafte Ausgestaltungen der erfindungsgemäßen Vorrichtung und umgekehrt.

Die Zeichnung besteht aus den Figuren 1 bis 3.

Fig. 1 zeigt die $\mu$-Schtupf-Kurve.
Fig. 2 in Form eines Blockdiagramms den Einsatz der Erfindung zur Plausibilisierung einer Massenschätzung.
Fig. 3 zeigt den Ablauf des erfindungsgemäßen Verfahrens.

Der Kern der Erfindung beruht auf der Tatsache, dass eine Zuladung des Fahrzeuges sich auf veränderte Radlasten niederschlägt. Umgekehrt kann aus den statischen und dynamischen Radlasten auf die Beladung geschlossen werden. Die Radlasten lassen sich aus der Schlupfreaktion des Rades auf eine bekannte Reifenlängskraft berechnen.

Die Berechnung der Radlasten hängt von einigen weiter unten aufgeführten Parametern (z.B. der Reifenlängssteifigkeit) ab. Da sich einige dieser Parameter während des Fahrzeugsbetriebs ändern können und zu einem entsprechenden Fehler bei der Radlastberechnung führen könnten, bietet es sich an, die Radlaständerungen miteinander ins Verhältnis zu stellen. Geht man davon aus, dass die Parameter zwar weitgehend unbekannt, aber an allen vier Rädern gleich groß sind, kürzen sich diese Parameter heraus und stellen keine Fehlerquelle mehr dar.

Aus dem Vergleich der statischen Radlasten zueinander kann zum Beispiel auf die momentane Schwerpunktslage vor allem entlang der Längsachse geschlossen werden. Aus der Verschiebung des Schwerpunktes z.B. im Vergleich zum Leerfahrzeug ist ein Rückschluss über die momentane Beladung möglich.

So hat beispielsweise ein typischer Kleintransporter den Schwerpunkt mehr oder weniger auf der Hälfte des Abstandes zwischen Vorder- und Hinterachse. Außerdem befindet sich die Ladefläche typischerweise im hinteren Teil des Fahrzeugs. Wird das Fahrzeug beladen, so wandert der Schwerpunkt der Gesamtmasse in Richtung der Hinterachse. Die Radlasten an der Hinterachse erhöhen sich mehr als die der Vorderachse. Durch Auswertung des jeweiligen Radverhaltens und durch Vergleich der Räder miteinander, kann die Verschiebung des Schwerpunktes erkannt und auf eine vorhandene Beladung geschlossen werden.

Die Ergebnisse der Schwerpunktslagenschätzung bzw. Raddynamik-Analyse lassen nicht immer eindeutig auf den Beladungszustand schließen. Verändert sich beispielsweise die Lage des Schwerpunktes nicht, kann nicht zwangsläufig auf ein leeres Fahrzeug geschlossen werden; es wäre nämlich denkbar, dass das Fahrzeug genau im Fahrzeugschwerpunkt beladen worden ist. Andererseits deutet aber eine signifikante Schwerpunktsverschiebung in Richtung der Hinterachse eindeutig auf eine erhöhte Beladung hin. Die Eindeutigkeit der Aussage hängt in bedeutendem Maße von der Fahrzeuggeometrie ab, insbesondere der Lage und Dimensionen der Ladefläche. Aufgrund dieser Einschränkungen ersetzt die hier beschriebene Erfindung nicht eine explizite Massenschätzung, dient aber in konstruktiver Weise der Plausibilisierung der Ergebnisse bestehender Massenalgorithmen.

Neben der Auswertung der statischen Radlasten eignen sich auch die dynamischen Radlasten zur Ermittlung der Schwerpunktslage. Zum Beispiel kann man beobachten, dass das kurveninnere Hinterrad beim leeren Fahrzeug während leichter bis mittlerer Kurvenfahrt stark entlastet oder sogar angehoben wird, während das kurveninnere Vorderrad weit weniger stark entlastet wird. Beim beladenen Fahrzeug hingegen kann es sich genau umgekehrt verhalten:

das kurveninnere Hinterrad wird kaum entlastet, während das kurveninnere Vorderrad stark entlastet wird. Dieses Verhalten lässt sich mit dem auf beiden Achsen verteilten Höhenschwerpunkt begründen. Das Heck des leeren Fahrzeuges hat einen relativ hohen Schwerpunkt, das schon bei moderaten Querbeschleunigungen für hohe dynamische Radlasten sorgt. Dass das Fahrzeug nicht umkippt liegt daran, dass die Frontpartie des Fahrzeuges durch seinen typischerweise tiefen Schwerpunkt für die ausreichende Rollstabilität sorgt. Die Absenkung des Schwerpunktes an der Hinterachse lässt auf ein beladenes Fahrzeug schließen.

Individuelle Radlasten können mittels zwei zugrunde gelegten Formeln berechnet werden. Die Radlast FN berechnet sich bei gegebenem Reibbeiwert und Reifenlängskraft Fb wie folgt:

$$FN = Fb / \mu \; .$$

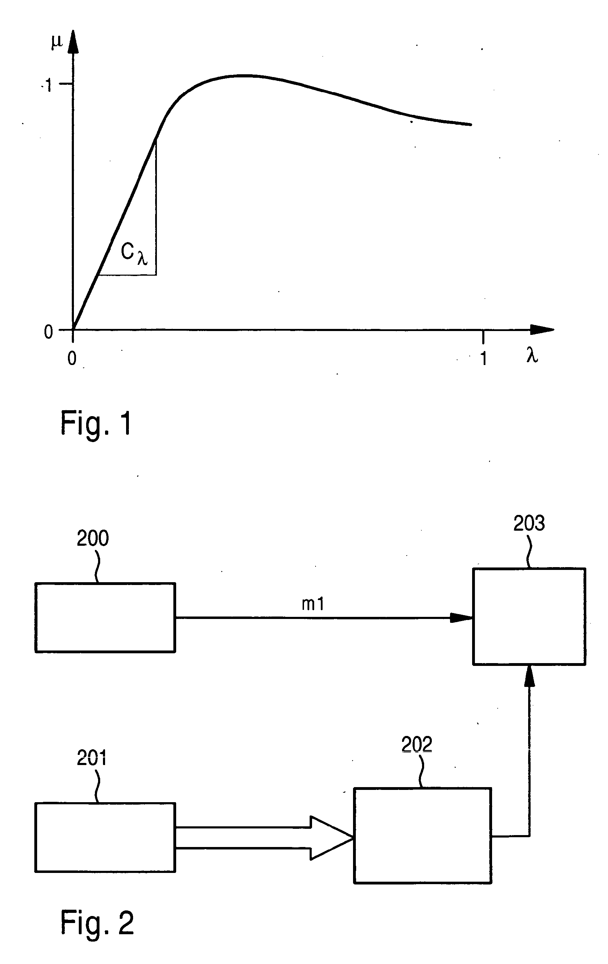

Der momentane Reibbeiwert $\mu$ ergibt sich aus der so genannten $\mu$-Schlupf-Kurve des Reifens, welche in Abb. 1 dargestellt ist. Bei dieser Darstellung ist in Abszissenrichtung der Radschlupf $\lambda$ und in Ordinatenrichtung der Reibbeiwert $\mu$ aufgetragen.

Im linearen Ast der Kurve (linker Bereich) wird der Reibbeiwert $\mu$ bei bekanntem Längsschlupf $\lambda$ und bekannter Reifenlängssteifigkeit C wie folgt berechnet:

$$\mu = C * \lambda$$

Die Reifenlängskraft Fb kann im Antriebsfall aus dem Antriebsmoment, im Bremsfall aus der Bremskraft ermittelt werden. Der Reifenlängsschlupf $\lambda$ ergibt sich aus der gemessenen Raddrehzahl und der Fahrzeuggeschwindigkeit. Die Reifenlängssteifigkeit C ist eine reifenabhängige Kenngröße.

Aus den genannten Beziehungen ergibt sich das Ergebnis der Radlasten-Analyse entweder analytisch direkt als Längenverschiebung oder durch heuristische Auswertung der Eingangssignale ("abhebendes kurveninnere Hinterrad bei leichter Kurvenfahrt") und Ausgabe einer Zuladungswahrscheinlichkeit ("Fahrzeug unbeladen").

Das jeweilige Ergebnis aus der Analyse der statischen und dynamischen Radlaständerungen wird nun entsprechend der möglichen Schlussfolgerung dahingehend verwendet, eine Massenschätzung zu plausibilisieren. Diese Plausibilisierung kann durch obere und untere Grenzen der geschätzten Masse umgesetzt werden.

Wird beispielsweise eine Verlagerung des Schwerpunktes erkannt, so lautet die Schlussfolgerung: "das Fahrzeug ist nicht leer". Eine Plausibilisierung könnte so realisiert werden, dass man eine untere Mindestgrenze für die geschätzte Masse auf einen plausiblen Wert, z.B. entsprechend einem teilbeladenen Fahrzeuges anhebt.

In Fig. 2 findet in Block 200 eine Massenschätzung für das Fahrzeug statt. Mit dieser Massenschätzung wird die Fahrzeugmasse m1 ermittelt. In Block 201 findet eine Analyse der Radlasten statt. Mit diesen Radlasten werden in Block 202 erfindungsgemäß weitere Informationen über die Masse gewonnen. Dies kann beispielsweise eine Information darüber sein, ob das Fahrzeug beladen oder unbeladen ist. In Block 203 wird anhand dieser Information über die Masse überprüft, ob die in Block 200 ermittelte Fahrzeugmasse plausibel ist oder nicht.

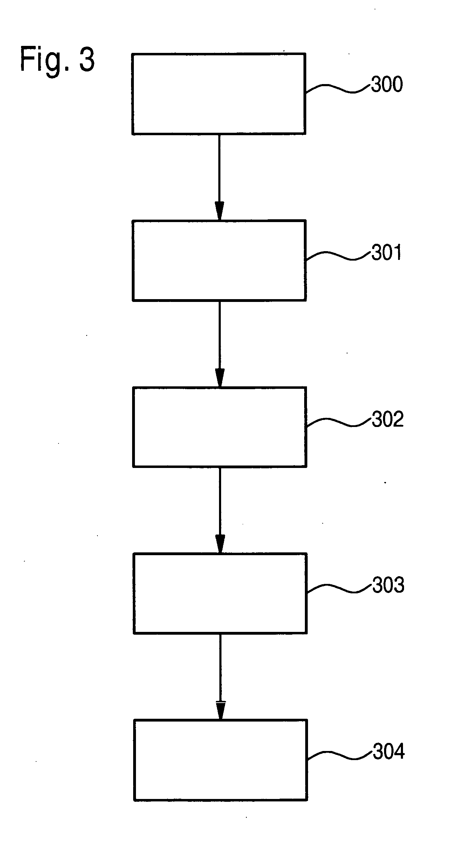

Der Ablauf des erfindungsgemäßen Verfahrens ist in Fig. 3 dargestellt. Nach dem Start des Verfahrens zur Detektion des Beladungszustandes eines Kraftfahrzeugs in Block 300 werden in Block 301 bei Nichtvorliegen einer Kurvenfahrt erste Radlasten wenigstens des kurveninneren Hinterrades und des kurveninneren Vorderrades ermittelt werden. Anschließend werden in Block 302 bei Vorliegen einer Kurvenfahrt zweite Radlasten wenigstens des kurveninneren Hinterrades und des kurveninneren Vorderrades ermittelt. Abhängig von den ersten und zweiten Radlasten wird in Block 303 eine Information über den Beladungszustand des Kraftfahrzeugs ermittelt. In Block 304 endet das Verfahren.

**Patentansprüche**

1. Verfahren zur Detektion des Beladungszustandes eines Kraftfahrzeugs, bei dem

   - bei Nichtvorliegen einer Kurvenfahrt erste Radlasten aller Räder ermittelt werden (301),
   - bei Vorliegen einer Kurvenfahrt zweite Radlasten wenigstens des kurveninneren Hinterrades und des kurveninneren Vorderrades ermittelt werden (302) und
   - abhängig von den ersten und zweiten Radlasten der kurveninneren Räder eine Information über den Beladungszustand des Kraftfahrzeugs ermittelt wird (303), wobei es sich bei der Information über den Beladungszustand um die Ermittlung handelt, ob das Fahrzeug unbeladen oder beladen ist,

   **dadurch gekennzeichnet,**
   **dass** das Fahrzeug dann als unbeladen detektiert wird (303), wenn

   - die zweite Radlast (302) des kurveninneren Vorderrades um einen ersten Betrag geringer als die erste Radlast (301) des kurveninneren Vorderrades ist und
   - die zweite Radlast (302) des kurveninneren Hinterrades um einen zweiten Betrag geringer als die erste Radlast (301) des kurveninneren Hinterrades ist, wobei der zweite Betrag größer als der erste Betrag ist und

   **dass** das Fahrzeug dann als beladen detektiert wird (303), wenn

   - die zweite Radlast (302) des kurveninneren Vorderrades um einen ersten Betrag geringer als die erste Radlast (301) des kurveninneren Vorderrades ist und
   - die zweite Radlast (302) des kurveninneren Hinterrades um einen zweiten Betrag geringer als die erste Radlast (301) des kurveninneren Hinterrades ist, wobei der zweite Betrag kleiner als der erste Betrag ist

2. Verfahren nach Anspruch 1, **dadurch gekennzeichnet, dass** das Fahrzeug dann als unbeladen detektiert wird (303), wenn

   - die zweite Radlast (302)des kurveninneren Vorderrades nur geringfügig geringer als die erste Radlast (301) des kurveninneren Vorderrades ist und
   - die zweite Radlast (302) des kurveninneren Hinterrades wesentlich geringer als die erste Radlast (301) des kurveninneren Hinterrades ist und

3. Verfahren nach Anspruch 1, **dadurch gekennzeichnet, dass** das Fahrzeug dann als beladen detektiert wird (303), wenn

   - die zweite Radlast (302) des kurveninneren Vorderrades wesentlich geringer als die erste Radlast (301) des kurveninneren Vorderrades ist und
   - die zweite Radlast (302) des kurveninneren Hinterrades nur geringfügig geringer als die erste Radlast (301) des kurveninneren Hinterrades ist.

4. Verfahren nach Anspruch 1, **dadurch gekennzeichnet, dass** die Ermittlung der ersten Radlasten (301) und der zweiten Radlasten (302) derart vorgenommen wird, dass sich zwischen den beiden Ermittlungen die Beladung oder Beladungsverteilung des Fahrzeugs nicht ändert.

5. Verfahren nach Anspruch 1, **dadurch gekennzeichnet, dass** die Radlasten (301, 302) aus der Reifenlängskraft (Fb) und dem Reibbeiwert (μ) des Kontaktes zwischen Reifen und Fahrbahn ermittelt werden.

6. Verfahren nach Anspruch 1, **dadurch gekennzeichnet, dass**

   - zusätzlich die Radlasten an der Hinterachse mit den Radlasten an der Vorderachse verglichen werden und
   - für den Fall, dass die Radlasten an der Hinterachse signifikant höher als die Radlasten an der Vorderachse sind, das Fahrzeug als beladen detektiert wird.

**Claims**

1. Method for detecting the load state of a motor vehicle, in which

   - first wheel loads of all wheels are determined (301) when cornering is not occurring,
   - second wheel loads of at least the rear wheel on the inside of the bend and the front wheel on the inside of the bend are determined (302) when cornering is occurring, and
   - information about the load state of the motor vehicle is determined (303) as a function of the first and second wheel loads of the wheels on the inside of the bend, wherein the information about the load state concerns determining whether the vehicle is unladen or laden,

   **characterized**
   **in that** the vehicle is detected (303) as being unladen when

- the second wheel load (302) of the front wheel on the inside of the bend is lower than the first wheel load (301) of the front wheel on the inside of the bend by a first absolute value, and
- the second wheel load (302) of the rear wheel on the inside of the bend is lower than the first wheel load (301) of the rear wheel on the inside of the bend by a second absolute value,

wherein the second absolute value is higher than the first absolute value, and **in that** the vehicle is detected (303) as being laden when

- the second wheel load (302) of the front wheel on the inside of the bend is lower than the first wheel load (301) of the front wheel on the inside of the bend by a first absolute value, and
- the second wheel load (302) of the rear wheel on the inside of the bend is lower than the first wheel load (301) of the rear wheel on the inside of the bend by a second absolute value,

wherein the second absolute value is lower than the first absolute value.

2. Method according to Claim 1, **characterized in that** the vehicle is detected (303) as being unladen when

- the second wheel load (302) of the front wheel on the inside of the bend is only slightly lower than the first wheel load (301) of the front wheel on the inside of the bend, and
- the second wheel load (302) of the rear wheel on the inside of the bend is significantly lower than the first wheel load (301) of the rear wheel on the inside of the bend.

3. Method according to Claim 1, **characterized in that** the vehicle is detected (303) as being laden when

- the second wheel load (302) of the front wheel on the inside of the bend is significantly lower than the first wheel load (301) of the front wheel on the inside of the bend, and
- the second wheel load (302) of the rear wheel on the inside of the bend is only slightly lower than the first wheel load (301) of the rear wheel on the inside of the bend.

4. Method according to Claim 1, **characterized in that** the determination of the first wheel loads (301) and the determination of the second wheel loads (302) are performed in such a way that the load or load distribution of the vehicle does not change between the two determinations.

5. Method according to Claim 1, **characterized in that** the wheel loads (301, 302) are determined from the tyre longitudinal force (Fb) and the friction coefficient ($\mu$) of the contact between the tyre and the underlying surface.

6. Method according to Claim 1, **characterized in that**

- the wheel loads at the rear axle are additionally compared with the wheel loads at the front axle, and
- in the event of the wheel loads at the rear axle being significantly higher than the wheel loads at the front axle, the vehicle is detected as being laden.

**Revendications**

1. Procédé de détection de l'état de charge d'un véhicule automobile, selon lequel

- en l'absence d'une trajectoire en virage, des premières charges de roue de toutes les roues sont déterminées (301),
- en présence d'une trajectoire en virage, des deuxièmes charges de roue d'au moins la roue arrière à l'intérieur du virage et de la roue avant à l'intérieur du virage sont déterminées (302) et
- une information concernant l'état de charge du véhicule automobile est déterminée en fonction des premières et deuxièmes charges de roue des roues à l'intérieur du virage (303),

l'information concernant l'état de charge consistant à déterminer si le véhicule est non chargé ou chargé, **caractérisé en ce que** le véhicule est détecté comme étant non chargé (303) lorsque

- la deuxième charge de roue (302) de la roue avant à l'intérieur du virage est inférieure d'un premier montant à la première charge de roue (301) de la roue avant à l'intérieur du virage et
- la deuxième charge de roue (302) de la roue arrière à l'intérieur du virage est inférieure d'un deuxième montant à la première charge de roue (301) de la roue arrière à l'intérieur du virage,

le deuxième montant étant supérieur au premier montant, et en ce que le véhicule est détecté comme étant chargé (303) lorsque

- la deuxième charge de roue (302) de la roue avant à l'intérieur du virage est inférieure d'un premier montant à la première charge de roue (301) de la roue avant à l'intérieur du virage et
- la deuxième charge de roue (302) de la roue arrière à l'intérieur du virage est inférieure d'un deuxième montant à la première charge de roue (301) de la roue arrière à l'intérieur du virage,

le deuxième montant étant inférieur au premier montant.

2. Procédé selon la revendication 1, **caractérisé en ce que** le véhicule est détecté comme étant non chargé (303) lorsque

    - la deuxième charge de roue (302) de la roue avant à l'intérieur du virage n'est que légèrement inférieure à la première charge de roue (301) de la roue avant à l'intérieur du virage et
    - la deuxième charge de roue (302) de la roue arrière à l'intérieur du virage est nettement inférieure à la première charge de roue (301) de la roue arrière à l'intérieur du virage.

3. Procédé selon la revendication 1, **caractérisé en ce que** le véhicule est détecté comme étant chargé (303) lorsque

    - la deuxième charge de roue (302) de la roue avant à l'intérieur du virage est nettement inférieure à la première charge de roue (301) de la roue avant à l'intérieur du virage et
    - la deuxième charge de roue (302) de la roue arrière à l'intérieur du virage n'est que légèrement inférieure à la première charge de roue (301) de la roue arrière à l'intérieur du virage.

4. Procédé selon la revendication 1, **caractérisé en ce que** la détermination des premières charges de roue (301) et des deuxièmes charges de roue (302) est effectuée de telle sorte que le chargement ou la distribution du chargement du véhicule ne change pas entre les deux déterminations.

5. Procédé selon la revendication 1, **caractérisé en ce que** les charges de roue (301, 302) sont déterminées à partir de la force longitudinale de pneu (Fb) et du coefficient de frottement ($\mu$) du contact entre le pneu et la chaussée.

6. Procédé selon la revendication 1, **caractérisé en ce que**

    - les charges de roue sur l'essieu arrière sont en plus comparées avec les charges de roue sur l'essieu avant et
    - dans le cas où les charges de roue sur l'essieu arrière sont nettement supérieures aux charges de roue sur l'essieu avant, le véhicule est détecté comme étant chargé.

Fig. 1

Fig. 2

Fig. 3

300

301

302

303

304

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10307511 A1
- US 6015192 A
- DE 10307511 B4

**In der Beschreibung aufgeführte Nicht-Patentliteratur**

- Monitoring of the friction coefficient between tyre and road surface. **GERMANN et al.** Control Applications, 1994, Proceedings of the third IEEE Conference. IEEE, 24. August 1994, 613-618